(19) Europäisches Patentamt
European Patent Office
Office européen des brevets

(11) **EP 2 857 802 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
***G01D 5/38*** *(2006.01)*

(21) Anmeldenummer: **14185047.9**

(22) Anmeldetag: **17.09.2014**

(54) **Optische Positionsmesseinrichtung**

Optical positioning device

Dispositif optique de mesure de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2013 DE 102013220184**

(43) Veröffentlichungstag der Anmeldung:
**08.04.2015 Patentblatt 2015/15**

(73) Patentinhaber: **Dr. Johannes Heidenhain GmbH 83301 Traunreut (DE)**

(72) Erfinder:
• **Holzapfel, Wolfgang**
  **83119 Obing (DE)**
• **Drescher, Jörg**
  **83122 Samerberg (DE)**
• **Kellner, Robert**
  **83329 Waging am See (DE)**
• **Meissner, Markus**
  **83236 Übersee (DE)**

(56) Entgegenhaltungen:
EP-A1- 1 533 594    EP-A2- 1 762 828
EP-A2- 1 901 041    US-A1- 2012 032 067

EP 2 857 802 B1

**Beschreibung**

## GEBIET DER TECHNIK

Die vorliegende Erfindung betrifft eine optische Positionsmesseinrichtung gemäß dem Oberbegriff von Anspruch 1, die zur hochgenauen Bestimmung der Relativposition zweier zueinander beweglicher Objekte geeignet ist.

## STAND DER TECHNIK

Eine gattungsgemäße optische Positionsmesseinrichtung ist aus der EP 1 762 828 A2 der Anmelderin bekannt. Diese umfasst eine Maßverkörperung, die mit einem der beiden Objekte verbunden ist sowie mindestens ein Abtastsystem zur Abtastung der Maßverkörperung, die mit dem anderen der beiden Objekte verbunden ist. Das Abtastsystem ist hierbei derart ausgebildet, dass darüber eine gleichzeitige Positionsbestimmung entlang einer ersten lateralen Verschiebungsrichtung als auch entlang einer vertikalen Verschiebungsrichtung der Objekte möglich ist. Auf Seiten des Abtastsystems ist zur Positionsbestimmung in der ersten lateralen und vertikalen Verschiebungsrichtung ein erster und ein zweiter Abtaststrahlengang ausgebildet, in denen jeweils aus zwei nicht-spiegelsymmetrischen, interferierenden Teilstrahlenbündeln ausgangsseitig eine Gruppe phasenverschobener Signale erzeugbar ist.

In der Praxis wird die Strahlung der Lichtquelle dem Abtastsystem über einen ersten Lichtleiter zugeführt. Dadurch ist es möglich, die Lichtquelle entfernt vom Messort anzuordnen. Ferner ist vorgesehen, der Detektoranordnung die vom Abtastsystem gelieferten interferierenden Teilstrahlenbündel über einen zweiten Lichtleiter zuzuführen, um auf diese Art und Weise Störungen der Detektoranordnung zu minimieren.

Die US 2012/0032067 A1 offenbart eine optische 2D-Positionsmesseinrichtung, basierend auf einem interferentiellen Abtastprinzip. Abtastseitig ist hierbei ein optisches Element vorgesehen, in dem Retroreflektoren integriert ausgebildet sind, so dass ein besonders kompakter und stabiler Abtastkopf resultiert.

Aus der EP 1 533 594 A1 ist eine interferentielle optische Positionsmesseinrichtung bekannt, die neben einer Lichtquelle, einer Detektoreinheit, mehrere Gitter sowie einen Multiplex-Bereich im Abtastkopf umfasst, über den eine Rückreflexion von Teilstrahlenbündeln zur Maßverkörperung erfolgt. Eine Positionserfassung entlang mehrerer Messrichtungen ist nicht vorgesehen.

## ZUSAMMENFASSUNG DER ERFINDUNG

Der vorliegenden Erfindung liegt die Aufgabe zugrunde, die bekannte gattungsgemäße optische Positionsmesseinrichtung derart weiterzubilden, dass darüber auch eine Positionsbestimmung entlang einer zweiten lateralen Verschiebungsrichtung der Objekte möglich ist.

Diese Aufgabe wird erfindungsgemäß durch eine optische Positionsmesseinrichtung mit den Merkmalen des Anspruchs 1 gelöst. Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur Erfassung der Position von zwei relativ zueinander beweglichen Objekten umfasst eine Maßverkörperung, die mit einem der beiden Objekte verbunden ist sowie ein Abtastsystem zur Abtastung der Maßverkörperung, die mit dem anderen der beiden Objekte verbunden ist, wobei über das Abtastsystem eine gleichzeitige Positionsbestimmung entlang einer ersten lateralen Verschiebungsrichtung als auch entlang einer vertikalen Verschiebungsrichtung der Objekte möglich ist und hierzu auf Seiten des

Abtastsystems zwei Abtaststrahlengänge ausgebildet sind, in denen jeweils aus interferierenden Teilstrahlenbündeln ausgangsseitig eine Gruppe phasenverschobener Signale erzeugbar ist. Über das Abtastsystem ist ferner mindestens ein dritter Abtaststrahlengang ausgebildet, über den eine Positionsbestimmung entlang einer zweiten lateralen Verschiebungsrichtung der Objekte möglich ist. Die Strahlung einer Lichtquelle ist über einen ersten Lichtleiter und eine für alle drei Abtaststrahlengänge gemeinsame Einkoppeloptik dem Abtastsystem zuführbar ist. Die in den drei Abtaststrahlengängen erzeugten interferierenden Teilstrahlenbündel sind über eine gemeinsame Auskoppeloptik in einen zweiten Lichtleiter einkoppelbar, der diese Strahlenbündel einer Detektoranordnung zuführt.

Mit Vorteil umfasst das Abtastsystem eingangsseitig ein Aufspaltgitter, das das von der Einkoppeloptik her einfallende Strahlenbündel in die drei Abtaststrahlengänge aufspaltet, wobei die +/- 1. Beugungsordnungen des Aufspaltgitters dem ersten und zweiten Abtaststrahlengängen zugeordnet sind und die 0. Beugungsordnung dem dritten Abtaststrahlengang zugeordnet ist.

Es kann vorgesehen sein, dass im dritten Abtaststrahlengang ein Teilstrahlenbündel in Richtung der Maßverkörperung propagiert, dort eine Aufspaltung in zwei weitere Teilstrahlenbündel erfährt, die in Richtung des Abtastsystems zurückreflektiert werden, wo sie jeweils eine Retroreflexion erfahren und entlang der zweiten lateralen Verschieberichtung (X) versetzt wieder in Richtung der Maßverkörperung propagieren, wo sie interferierend zur Überlagerung gelangen und zurück in Richtung des Abtastsystems propagieren, wo daraus mehrere phasenverschobene Signale bezüglich einer Relativbewegung entlang der zweiten lateralen Verschieberichtung (X) detektierbar ist.

In einer möglichen Ausführungsform umfasst das Abtastsystem ein Optikelement, auf dessen der Maßverkörperung zugewandten Seite mehrere, den verschiedenen Abtaststrahlengängen definiert zugeordnete Gitterfelder mit Transmissionsgittern sowie ein einkoppelseitiges Aufspaltgitter und ein auskoppelseitiges Aufspaltgitter angeordnet sind.

Hierbei kann vorgesehen sein, dass die Versatzabstände zwischen den Gitterfeldern und den Auskoppelgittern entlang der zweiten lateralen Verschiebungsrichtung identisch gewählt sind.

Es ist ferner möglich, dass zwischen dem Optikelement und der Maßverkörperung ein Deckglas angeordnet ist, das sich hinsichtlich seiner Lateralausdehnung über alle Abtaststrahlengänge erstreckt.

Alternativ kann auch vorgesehen sein, dass zwischen dem Optikelement und der Maßverkörperung ein thermisch kompensierter Glaskörper angeordnet ist, so dass Temperaturänderungen die optischen Weglängen der durchlaufenden Teilstrahlenbündel im Glas nicht verändern.

Desweiteren ist es möglich, dass der zweite Lichtleiter pro Abtaststrahlengang jeweils drei Multimodefasern umfasst, die am einkoppelseitigen Ende in einer gemeinsamen Ferrule angeordnet sind.

In einer vorteilhaften Ausführungsform sind die erste und zweite laterale Verschiebungsrichtung senkrecht zueinander orientiert und die Maßverkörperung ist als Kreuzgitter ausgebildet.

Mit Vorteil weisen die Abtaststrahlengänge aller drei Verschiebungsrichtungen ein gemeinsames Abtastzentrum auf.

Es kann ferner vorgesehen sein, dass mindestens ein Teilstrahlenbündel in den Abtaststrahlengängen zwischen dem ersten und dem zweiten Auftreffen auf der Maßverkörperung einen Versatz entlang der jeweiligen Verschiebungsrichtung erfährt.

In einer weiteren Ausführungsform ist es möglich, dass zur Rückreflexion der Teilstrahlenbündel das Optikelement diffraktive Bauteile umfasst, die mehrere optische Funktionen in sich vereinen.

Mit Hilfe der erfindungsgemäßen optischen Positionsmesseinrichtung ist es möglich, die Relativposition zweier beweglicher Objekte entlang mindestens einer weiteren, lateralen Verschiebungsrichtung hochgenau zu bestimmen. Das am Messort platzierte Abtastsystem kann hierbei vollkommen passiv ausgebildet werden, d.h. es resultiert hier kein Wärmeeintrag durch die Lichtquelle, der in Hochpräzisionsanwendungen ggf. die Messgenauigkeit bei der Positionsbestimmung beeinträchtigen könnte. Dies wird i.w. durch die Anbindung der Lichtquelle als auch der Detektoranordnung an das Abtastsystem mittels Lichtleitern gewährleistet. Besonders vorteilhaft erweist sich hierbei, dass für alle Verschiebungs- respektive Messrichtungen der erfindungsgemäßen optischen Positionsmesseinrichtung eine gemeinsame Ein- und Auskoppeloptik zwischen dem Abtastsystem und den Lichtleitern verwendet werden kann.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a    eine erste schematisierte Ansicht der Abtaststrahlengänge in einem Ausführungsbeispiel der erfindungsgemäßen optischen Positionsmesseinrichtung;

Figur 1b    eine zweite schematisierte Ansicht der Abtaststrahlengänge in einem Ausführungsbeispiel der erfindungsgemäßen optischen Positionsmesseinrichtung;

Figur 1c    eine Draufsicht auf die Abtastplatte des Abtastsystems des Ausführungsbeispiels aus den Figuren 1a, 1b mit den darauf angeordneten optischen Komponenten;

Figur 2a    schematisierte Ansichten der Abtaststrahlengänge eines weiteren Ausführungsbeispiels der erfindungsgemäßen optischen Positionsmesseinrichtung;

Figur 2b    eine Draufsicht auf die Abtastplatte des Abtastsystems der optischen Positionsmesseinrichtung aus den Figuren 2a, 2b;

Figur 3    eine Draufsicht auf eine weitere alternative Ausführungsform der Abtastplatte eines Abtastsystems einer erfindungsgemäßen optischen Positionsmesseinrichtung;

Figur 4    verschiedene schematisierte Ansichten der Abtaststrahlengänge in einem weiteren Ausführungsbeispiel der erfindungsgemäßen optischen Positionsmesseinrichtung;

Figur 5    verschiedene schematisierte Ansichten der Abtaststrahlengänge in einem weiteren Ausführungsbeispiel der erfindungsgemäßen optischen Positionsmesseinrichtung;

Figur 6    eine schematisierte Darstellung der der Abtaststrahlengänge sowie der Auskoppeloptik eines Ausführungsbeispiels der erfindungsgemäßen optischen Positionsmesseinrichtung;

Figur 7    eine Draufsicht auf die Ferrule der Auskoppeloptik des Ausführungsbeispiels der Figur 6;

Figur 8    eine Draufsicht auf die Ferrule einer alternativen Ausführungsform der erfindungsgemäßen optischen Positionsmesseinrichtung.

## BESCHREIBUNG DER AUSFÜHRUNGSFORMEN

Bevor im Anschluss konkrete Ausführungsbeispiele der erfindungsgemäßen optischen Positionsmesseinrichtung anhand der Figuren erläutert werden sei vorab kurz das Konzept der Positionsmesseinrichtung erläutert, die aus der EP 1 762 828 A2 bekannt ist. Diese ist wie eingangs erwähnt zur Erfassung von Positionsänderungen entlang zweier Verschiebungsrichtungen respektive Messachsen geeignet. Im entsprechen Abtastsystem sind zwei Abtaststrahlengänge zueinander verkippt bzw. asymmetrisch ausgebildet. Hierbei wird das von einer Lichtquelle gelieferte Strahlenbündel über einen ersten Lichtleiter, ausgebildet als Singlemode-Faser, dem Abtastsystem zugeführt und nach der Auskopplung aus dem Lichtleiter über eine Kollimationsoptik kollimiert. Danach gelangt das kollimierte Strahlenbündel auf ein Aufspaltgitter, in dem es in zwei Abtaststrahlengänge für zwei Achsen aufgespalten wird. Die beiden Achsen seien nachfolgend auch als A-Achse und B-Achse der Positionsmesseinrichtung bezeichnet. Die eigentlich interessierenden Positionsinformationen entlang der lateralen Verschiebungsrichtung Y und der vertikalen Verschiebungsrichtung Z ergeben sich aus der Summation und der Differenzbildung der Positionssignale A, B gemäß den nachfolgenden Gleichungen 1a und 1b:

$$Y = (A+B)/2 \qquad \text{(Gl. 1a)}$$

$$Z = (A-B)/2*SP_z/SP_y \qquad \text{(Gl. 1b)}$$

Hierbei bezeichnet $SP_z$ die Signalperiode in Z-Richtung und $SP_y$ die Signalperiode in Y-Richtung.

Die Strahlenbündel gelangen in den jeweiligen Abtaststrahlengängen zunächst auf die Maßverkörperung, die als Reflexionsgitter ausgebildet ist, werden darüber in Teilstrahlenbündel +/-1. Beugungsordnung aufgespalten und zurück zum Abtastsystem gebeugt. Dort wird jedes der Teilstrahlbündel durch ein diffraktives Dachkantprisma in Richtung Maßverkörperung zurück gelenkt. An der Maßverkörperung interferieren die beiden Teilstrahlenbündel jeweils, die überlagerten Strahlenbündel werden anschließend zu einer Auskoppeloptik weitergeleitet, die aus einer Fokussier- und einer Feldlinse besteht und daraufhin in einen zweiten Lichtleiter ausgekoppelt, der sechs Multimode-Lichtleitfasern umfasst.

Ausgehend vom erläuterten Prinzip aus der EP 1 762 828 A2 wird in der der erfindungsgemäßen optischen Positionsmesseinrichtung nunmehr eine weitere Achse respektive ein weiterer Abtaststrahlengang vorgesehen, der zur Positionserfassung entlang einer zweiten lateralen Verschiebungsrichtung dient, die senkrecht zur ersten lateralen Verschiebungsrichtung Y orientiert ist; die zweite laterale Verschiebungsrichtung wird nachfolgend als Verschiebungsrichtung X bezeichnet. Auf Seiten der Maßverkörperung wird hierbei eine zweidimensionale Maßverkörperung in Form eines sog. Kreuzgitters vorgesehen.

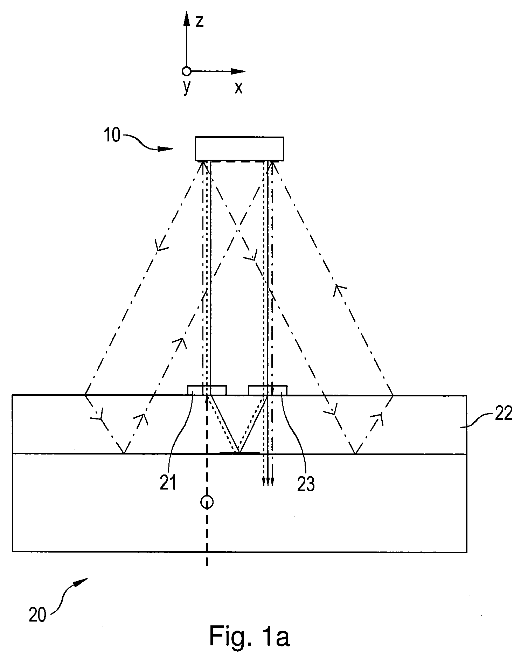

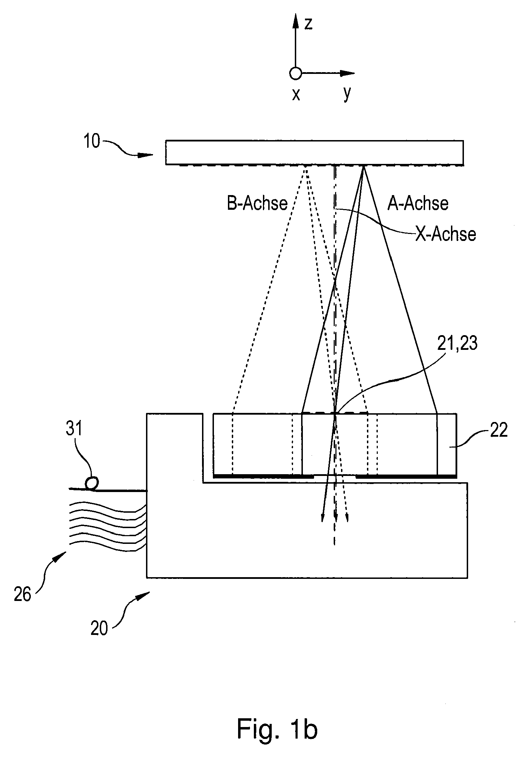

Die Abtaststrahlengänge eines Ausführungsbeispiels der erfindungsgemäßen optischen Positionsmesseinrichtung sind in den Figuren 1a und 1b in verschiedenen Schnittansichten gezeigt und werden nachfolgend erläutert. In diesen Darstellungen sind die Maßverkörperung 10 und das Abtastsystem 20 mit den Abtaststrahlengängen zur Erfassung von Positionsänderungen entlang der ersten lateralen Verschiebungsrichtung Y und der vertikalen Verschiebungsrichtung Z gepunktet bzw. durchgezogen dargestellt; diese entsprechen den bekannten Abtaststrahlengängen aus der oben diskutierten EP 1 762 828 A2. Strichpunktiert hingegen ist in den Figuren 1a, 1b der nunmehr erfindungsgemäß hinzugefügte weitere Abtaststrahlengang zur Positionserfassung entlang der zweiten lateralen Verschiebungsrichtung X dargestellt.

Das von einer nicht in den Figuren gezeigten Lichtquelle her einfallende Strahlenbündel gelangt analog zur EP 1 762 828 A2 im Abtastsystem 20 zunächst auf ein einkoppelseitiges Aufspaltgitter 21, wo eine Aufspaltung in die nunmehr insgesamt drei Abtaststrahlengänge erfolgt. Neben den resultierenden Teilstrahlenbündeln +/-1. Ordnung für die A-Achse und die B-Achse, d.h. für den ersten und zweiten Abtaststrahlengang, wird gemäß der vorliegenden Erfindung noch das in 0. Beugungsordnung resultierende Teilstrahlenbündel für den dritten Abtaststrahlengang genutzt, um eine Positionserfassung entlang der zweiten lateralen Verschiebungsrichtung X zu ermöglichen.

Das vom einkoppelseitigen Aufspaltgitter 21 kommende Teilstrahlenbündel 0. Beugungsordnung wird in x-Richtung an der Maßverkörperung 10 in zwei Teilstrahlenbündel +/-1. Ordnung aufgespalten und diese zurück zum Abtastsystem 20 gelenkt. In der Ansicht der Figur 1a propagiert das Teilstrahlenbündel +1.Ordnung des dritten Abtaststrahlengangs nach der Aufspaltung an der Maßverkörperung 10 nach links unten, das Teilstrahlenbündel -1.Ordnung nach rechts unten in Richtung des Abtastsystems 20. Dort treten sie in ein - nur schematisch angedeutetes - Optikelement 22 ein, welches als diffraktives Dachkantprisma ausgebildet ist. Es besteht aus einem ersten Transmissionsgitter, einem Reflektor und einem zweiten Transmissionsgitter. Das erste und zweite Transmissionsgitter ist auf der Oberseite des Optikelements 22 aufgebracht, die der Maßverkörperung 10 zugewandt ist. Der Reflektor befindet sich auf der Unterseite des Optikelements 22. Das erste und zweite Transmissionsgitter sind als diffraktive Strukturen ausgebildet und vereinen mehrere optische Funktionen. Sie lenken jeweils das einfallende Teilstrahlenbündel in Messrichtung X ab und fokussieren es in der Querrichtung Y durch eine Zylinderlinsenfunktion auf die Unterseite des Optikelements 22, wo sich der Reflektor befindet. Nach der Reflexion am Reflektor trifft es auf das zweite Transmissionsgitter, das das Teilstrahlenbündel wieder durch eine Zylinderlinsenfunktion in Y-Richtung kollimiert und in Messrichtung X ablenkt. So treten die beiden Teilstrahlenbündel jeweils entgegengesetzt zur Einfallsrichtung und in Messrichtung X gleichermaßen versetzt aus dem Optikelement 22 aus und propagieren wieder zurück zur Maßverkörperung 10. Alternativ zur Zylinderlinsenfunktion der Transmissionsgitter kann auch eine sphärische Linsenfunktion vorgesehen werden, die die Teilstrahlenbündel jeweils in beiden Richtungen X und Y fokussiert bzw. wieder kollimiert. Zur Überlagerung verschiedener optischer Funktionen in diffraktiven Strukturen sei an dieser Stelle ergänzend auf die EP 1 739 395 A2 verwiesen. Die beiden Teilstrahlenbündel treffen dann auf die Maßverkörperung 10, wo sie erneut in +1. bzw. -1 Beugungsordnung abgelenkt werden, so dass sie überlagert werden und interferieren. Das überlagerte Strahlenbündel propagiert parallel zur optischen Achse, die hier als sog. Sichtlinie bezeichnet wird, zurück zum Abtastsystem 20, um dann gemeinsam mit den Strahlen der A- und B-Achse ausgekoppelt und einer nicht in den Figuren gezeigten Detektoranordnung zugeführt zu werden.

Figur 1b zeigt eine Schnittansicht des erläuterten Ausführungsbeispiels der erfindungsgemäßen Positionsmesseinrichtung in der YZ-Ebene. Aus dieser Darstellung ist ersichtlich, dass alle Strahlen- und Teilstrahlenbündel des dritten Abtaststrahlengangs zur Erfassung einer X-Verschiebung ausschließlich in der XZ-Ebene propagieren.

Schematisiert angedeutet ist in Figur 1b zudem ein erster Lichtleiter 31 zum Zuführen des Strahlenbündels von der nicht gezeigten Lichtquelle zum Abtastsystem 20 sowie ein zweiter Lichtleiter 26 zum Zuführen der überlagerten Strahlenbündel vom Abtastsystem 20 zur ebenfalls nicht gezeigten Detektoranordnung.

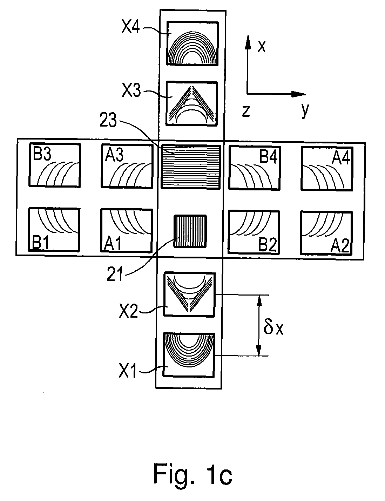

In Figur 1c ist stark schematisiert ein Teil der Seite des Abtastsystems 20, d.h. die Oberseite des Optikelements 22 gezeigt, die der Maßverkörperung 10 zugewandt ist und auf der mehrere Gitterfelder mit geeignet ausgebildeten Transmissionsgittern angeordnet sind, die die erforderliche Strahlumlenkungen in den drei Abtaststrahlengängen bewirken. Die verschiedenen Gitterfelder sind in dieser Darstellung hierbei mit den oben erläuterten Bezeichnungen für die verschiedenen Achsen A, B, X der erfindungsgemäßen Positionsmesseinrichtung bezeichnet und so den drei unterschiedlichen Abtaststrahlengängen zugeordnet. Außerdem sind in Figur 1c das einkoppelseitige Aufspaltgitter 21 für das von der Lichtquelle her einfallende Strahlenbündel gezeigt sowie das benachbart angeordnete auskoppelseitige Aufspaltgitter 23 für die wieder überlagerten Strahlenbündel der drei Abtaststrahlengänge.

Die in den Gitterfeldern A1 - A4 und B1 - B4 angeordneten Transmissionsgitter der A- und B-Achse wirken in X-Richtung als Zylinder-Linsen und lenken durch ein zusätzliches überlagertes Lineargitter in Y-Richtung ab. Die in den Gitterfeldern X1 - X4 angeordneten Transmissionsgitter der X-Achse wirken, wie oben beschrieben, als Zylinder-Linsen in der Y-Richtung und lenken aber ebenfalls durch ein überlagertes Lineargitter in X-Richtung ab. Die Fokus-Ebene der Linsenfunktionen aller Transmissionsgitter in den Gitterfeldern A1 - A4, B1 - B4 und X1 - X4 liegen jeweils auf der gegenüberliegenden Unterseite des Optikelements 22.

Die Zylinderlinsenfunktionen bewirken stets eine Fokussierung senkrecht zur jeweiligen Messrichtung X bzw. Y; die Ablenkfunktionen dagegen können sowohl eine Ablenkung in als auch quer zur Messrichtung beinhalten. Die Ablenkfunktionen werden so gewählt, dass einerseits die Teilstrahlenbündel nach Durchlaufen des Optikelements 22 jeweils anti-parallel zur Maßverkörperung 10 zurücklaufen und andererseits einen bestimmten Versatzabstand $\delta x$, $\delta y$ aufweisen. Erfindungsgemäß wird dieser Versatzabstand $\delta x$, $\delta y$ für alle drei Abtaststrahlengänge der Achsen A, B und X gleich gewählt, wobei im vorliegenden Ausführungsbeispiel lediglich $\delta x$ ungleich Null gewählt wird, während $\delta y = 0$ gilt. Damit treffen die überlagerten Strahlenbündel am gleichen Ort in einer XY-Ebene auf das auskoppelseitige Aufspaltgitter 23 und werden dort in drei überlagerte Strahlenbündel aufgespalten.

Wie in der EP 1 762 828 A2 beschrieben, sind im Strahlengang der Teilstrahlenbündel gemäß den Figuren 1a und 1b nicht dargestellte, polarisationsoptische Bauelemente eingebracht, die die beiden jeweils überlagerten Teilstrahlenbündel zueinander orthogonal polarisieren. Dies gilt auch für die zusätzliche Achse X.

Ein maßgeblicher Vorteil einer derartigen Ausbildung des dritten Abtaststrahlengangs zur Positionserfassung entlang der zweiten Verschiebungsrichtung X besteht darin, dass sowohl die Abtastzentren als auch die sog. neutralen Drehpunkte aller drei Achsen A, B und X zusammenfallen und ein gemeinsames Abtastzentrum bzw. einen gemeinsamen neutralen Drehpunkt bilden. Dies ist eine Folge der Symmetrie der Abtaststrahlengänge: Der Abtaststrahlengang vom einkoppelseitigen Aufspaltgitter bis zur Maßverkörperung und der Abtaststrahlengang von der Maßverkörperung zurück zum auskoppelseitigen Aufspaltgitter können durch eine Translation um die Versatzabstände $\delta x$, $\delta y$ ineinander übergeführt werden. Der gemeinsame neutrale Drehpunkt liegt daher auf einer Achse entlang der Z-Richtung, die durch die Mitte zwischen dem ein- und auskoppelseitigen Aufspaltgitter liegt. Die genaue Z-Lage des gemeinsamen neutralen Drehpunkts entlang dieser Achse wird durch die spezielle Wahl der Gitterkonstanten des einkoppelseitigen Aufspaltgitters und der Maßverkörperung bestimmt und soll hier nicht weiter betrachtet werden. Der gemeinsame neutrale Drehpunkt für alle drei Verschieberichtungen X, Y und Z hat besondere Vorteile: Eine kleine Kippung der Maßverkörperung oder der Abtasteinheit um eine beliebige Achse durch diesen gemeinsamen neutralen Drehpunkt verschiebt in linearer Näherung keine der Positionswerte X, Y oder Z dieser Positionsmesseinrichtung. Die Messwerte dieser Positionsmesseinrichtung lassen sich daher leicht interpretieren: sie liefern die Position des verschiebbaren Objekts am Ort dieses gemeinsamen neutralen Drehpunkts. Hätten die einzelnen Abtaststrahlengänge der Achsen A, B und X unterschiedliche neutrale Drehpunkte, so müssten aufwändige Transformationen der Positionswerte durchgeführt werden, um die XYZ-Lage des beweglichen Objekts an einem Objektpunkt bestimmen zu können.

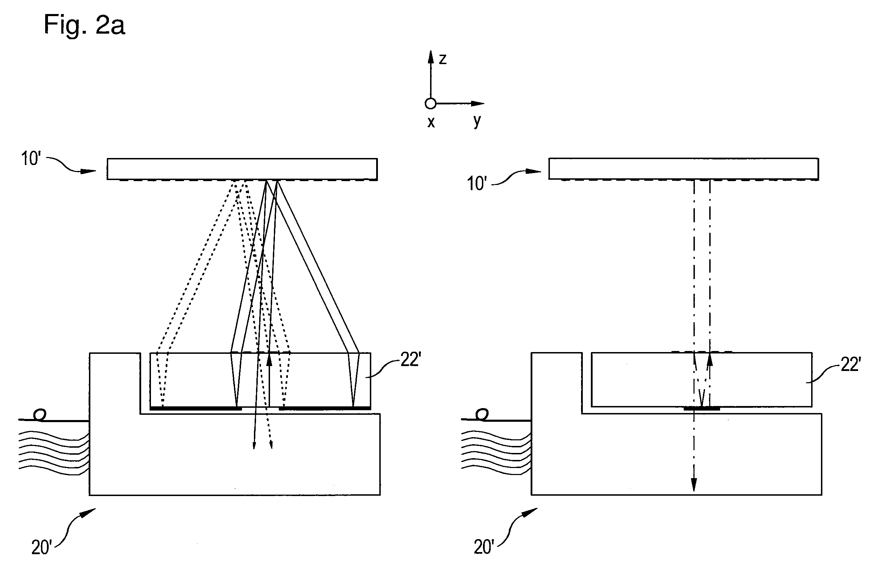

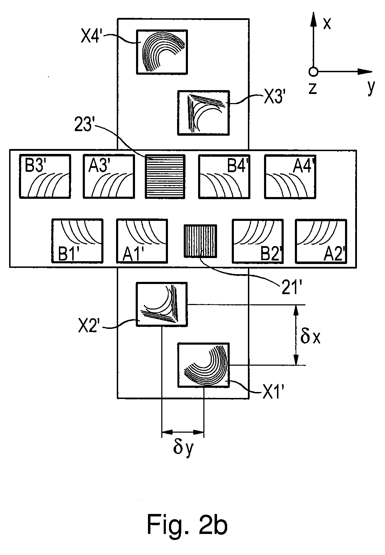

In Figur 2a sind für ein weiteres Ausführungsbeispiel der erfindungsgemäßen Positionsmesseinrichtung die Abtaststrahlengänge eines weiteren Ausführungsbeispiels der erfindungsgemäßen optischen Positionsmesseinrichtung gezeigt; hierbei sind in der linken Darstellung die Abtaststrahlengänge für die Achsen A, B schematisch gezeigt, rechts der zusätzlich vorgesehene dritte Abtaststrahlengang für die X-Achse. Figur 2b zeigt analog zu Figur 1c die Anordnung der verschiedenen Gitterfelder und Aufspaltgitter auf der Oberseite des Optikelements dieser Ausführungsform.

Nachfolgend wird der dritte Abtaststrahlengang dieses Ausführungsbeispiels erläutert, wobei hier die Gitterfelder und Aufspaltgitter grundsätzlich in der gleichen Reihenfolge durchlaufen werden wie im Ausführungsbeispiel der Figuren 1a - 1 c; die optischen Wirkungen einzelner Transmissionsgitter und die Anordnung der entsprechenden Gitterfelder unterscheiden sich jedoch vom oben erläuterten Ausführungsbeispiel.

Das der X-Achse zugeordnete Teilstrahlenbündel, das in 0. Beugungsordnung aus dem einkoppelseitigen Aufspaltgitter 21' austritt, trifft auf die Maßverkörperung 10', wo es durch Beugung in zwei Teilstrahlenbündel +1. und -1. Beugungsordnung aufgespalten wird; diese Teilstrahlenbündel propagieren zurück zum Abtastsystem. Dort treffen sie im Optikelement 22' auf die Gitterfelder X1' bzw. X3'. Die in diesen Gitterfeldern X1', X3' angeordneten Transmissionsgitter sind wiederum derart ausgestaltet, dass jeweils sie mehrere optische Funktionen in sich vereinen; so werden darüber die darauf einfallenden Teilstrahlenbündel in Messrichtung X abgelenkt (Funktion eines Ablenkgitters) und gleichzeitig senkrecht dazu in Y-Richtung fokussiert (Zylinderlinsenfunktion). Im vorliegenden Ausführungsbeispiel resultiert über die Transmissionsgitter der Gitterfelder X1', X3' zusätzlich noch eine Ablenkung in Y-Richtung (Funktion eines Ablenkgitters). Der Fokus der durch Transmissionsgitter derart beeinflussten Teilstrahlenbündel liegt wiederum bei allen Teilstrahlenbündel auf einem Reflektor, welcher sich auf der gegenüberliegenden Unterseite des Optikelements 22' befindet. Die Teilstrahlenbündel werden dort reflektiert und treffen dann im Optikelement 22' auf die Gitterfelder X2', X4'; die dort angeordneten Transmissionsgitter vereinen ebenfalls wieder mehrere optische Funktionen in sich. So werden darüber die Teilstrahlenbündel analog zum obigen Ausführungsbeispiel wieder kollimiert (Zylinderlinsenfunktion) und in Messrichtung X abgelenkt (Funktion eines Ablenkgitters). Im vorliegenden Ausführungsbeispiel resultiert darüber hinaus noch zusätzlich eine Ablenkung in Y-Richtung (Funktion eines Ablenkgitters). Die beiden aus den Gitterfeldern X2', X4' austretenden Teilstrahlenbündel treffen sich schließlich wieder an einem Punkt auf der Maßverkörperung 10', wo sie sich überlagern und interferieren und anschließend wieder zurück zum Abtastsystem 20' propagieren, wo sie das auskoppelseitige Aufspaltgitter 23' der Auskoppeloptik durchlaufen und dann in Richtung der Detektoranordnung propagieren.

Wie aus der Darstellung in Figur 2b ersichtlich, sind in diesem Ausführungsbeispiel alle Gitterfelder, die von den Teilstrahlenbündeln beim ersten und zweiten Durchlauf passiert werden sowohl in Messrichtung der jeweiligen Achse, als auch senkrecht zur Messrichtung der jeweiligen Achse versetzt zueinander angeordnet. Daher wird die Y-Ablenkung der Liniengitter der Gitterfelder A1'- A4' und B1' - B4' so angepasst, dass die Teilstrahlenbündel über den Reflektor auf der Rückseite des Optikelements 22' vom Gitterfeld A1' zum Gitterfeld A3', vom Gitterfeld A2' zum Gitterfeld A4', vom Gitterfeld B1' zum Gitterfeld B3' und vom Gitterfeld B2' zum Gitterfeld B4', gelangen können, anschließend wieder an der Maßverkörperung 10' aufeinandertreffen und miteinander entsprechend zum ersten Ausführungsbeispiel interferieren und zurück zur Auskoppeloptik gelangen können.

Im vorliegenden Ausführungsbeispiel ist gemäß der Darstellung in Figur 2b der Versatzabstand $\delta x$, $\delta y$ des Gitterfelds X1' gegenüber dem Gitterfeld X2' in Bezug auf die X- und Y-Richtung jeweils identisch zum Versatzabstand des Gitterfelds X3' gegenüber dem Gitterfeld X4', identisch zum Versatzabstand des Gitterfelds A1' gegenüber dem Gitterfeld A3', identisch zum Versatzabstand des Gitterfelds A2' gegenüber dem Gitterfeld A4', identisch zum Versatzabstand des Gitterfelds B1' gegenüber dem Gitterfeld B3' sowie identisch zum Versatzabstand des Gitterfelds B2' gegenüber dem Gitterfeld B4'.

Im obigen Ausführungsbeispiel der Figuren 1a - 1c hingegen lag in Bezug auf alle drei Abtaststrahlengänge lediglich ein Versatzabstand $\delta x$ der Gitterfelder A1, A2, B1, B2, X1, X3 entlang der X-Richtung gegenüber den Gitterfeldern A3, A4, B3, B4, X2, X4 vor, während der Versatzabstand $\delta y = 0$ gewählt wurde. Im vorliegenden Ausführungsbeispiel ist gemäß Figur 2b in Bezug auf alle drei Abtaststrahlengänge zusätzlich ein Versatzabstand $\delta y \neq 0$ der Gitterfelder A1', A2', B1', B2', X1', X3' gegenüber den Gitterfeldern A3', A4', B3', B4', X2', X4' entlang der Y-Richtung vorgesehen.

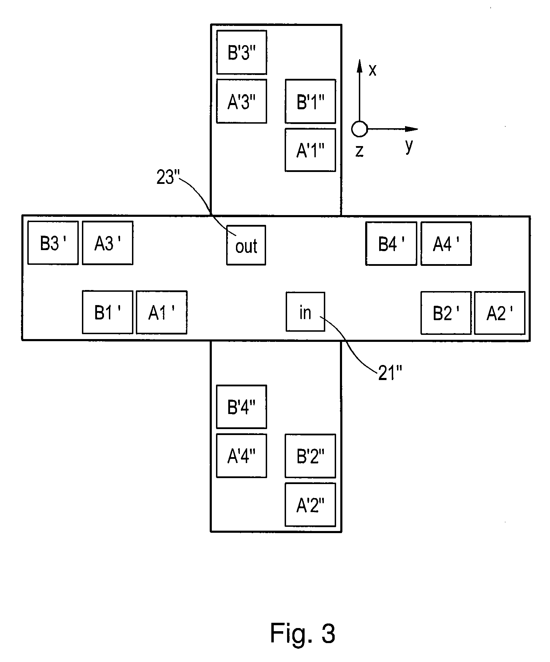

Eine Draufsicht auf die Oberseite des Optikelements eines weiteren Ausführungsbeispiels der erfindungsgemäßen optischen Positionsmesseinrichtung ist in analoger Darstellung zu den Figuren 1c und 2b in Figur 3 gezeigt. Der Strahlengangverlauf der Teilstrahlenbündel in den Abtaststrahlengängen der A- und B-Achse durch die Gitterfelder A1' - A4' und B1' - B4' ist identisch zum vorhergehenden Ausführungsbeispiel gemäß Figur 2b. Die Positionsmessung entlang der dritten Verschiebungsrichtung wird nunmehr erweitert und analog zur Positionsmessung der ersten beiden Verschiebungsrichtungen ausgeführt (A'-Achse und B'-Achse). Deren Abtaststrahlengänge und die Ausbildung der Gitterfelder A'1" - A'4" und B'1" - B'4" entsprechen den Abtaststrahlengängen der A- und B-Achse sowie den Gitterfeldern A1" - A4", B1" - B4"; die Anordnung der Gitterfelder A'1" - A'4" und B'1" - B'4" ist jedoch gegenüber den Gitterfeldern A1" - A4" und B1" - B4" um 90° bzgl. der Z-Richtung verdreht vorgesehen. Dadurch ist es möglich, neben der Messung der lateralen Verschiebungsrichtung X zusätzlich eine redundante Messung der vertikalen Verschiebungsrichtung Z durchzuführen. Durch die redundante Messung der vertikalen Verschiebungsrichtung Z können Fehlereinflüsse durch Mittelung reduziert und damit die Genauigkeit der Positionsmesseinrichtung verbessert werden.

In der bekannten Positionsmesseinrichtung aus der EP 1 762 828 A2 treffen die Teilstrahlenbündel der beiden vorgesehenen Abtaststrahlengänge jeweils mit einem Versatz in X-Richtung, also senkrecht zur einzigen lateralen Messrichtung wieder auf die Maßverkörperung. Im Gegensatz dazu sind bei der erfindungsgemäßen Positionsmesseinrichtung gemäß den bislang erläuterten Ausführungsbeispielen die beiden Teilstrahlenbündel des dritten vorgesehenen Abtaststrahlengangs zwar ebenfalls in X-Richtung versetzt, dies entspricht jedoch einem Versatz entlang der lateralen Messrichtung.

Aufgrund des zusätzlichen vorgesehenen dritten Abtaststrahlengangs zur Positionsbestimmung entlang der zweiten lateralen Verschiebungsrichtung X ist der Abtastabstand zwischen Maßverkörperung und Abtastsystem festgelegt, wenn die Gitterkonstante der Maßverkörperung und die Versatzabstände $\delta x$ bzw. $\delta y$ zwischen benachbarten Gitterfeldern festgelegt sind.

Es ist in der vorliegenden Erfindung weiterhin von Vorteil, die VersatzAbstände $\delta x$, $\delta y$ etwa im Ausführungsbeispiel der Figur 2a zwischen den Gitterfeldern A1' - A4', B1' - B4', welche jeweils vom gleichen Teilstrahlenbündel durchlaufen werden, A1' zu A3', A2' zu A4', B1' zu B3', B2' zu B4' und den Feldern mit den Auskoppelgittern 21', 23' einerseits bzw. zwischen den Gitterfeldern X1', X2' und den Gitterfeldern X3', X4' identisch zu wählen.

Geht man davon aus, dass der Versatzabstand $\delta x$ zwischen den Gitterfeldern A1'- A4' und B1' - B4' jeweils minimal gewählt wurde, so können die Gitterfelder X1' - X4' des dritten Abtaststrahlengangs nicht dichter aneinander gepackt werden. Die Wahl eines gleichen Versatzabstand $\delta$ zwischen den verschiedenen Feldern im Optikelement des Abtastsystems führt so zu einem minimalen Bauvolumen der erfindungsgemäßen Positionsmesseinrichtung.

Bezeichnet man ferner den Abtastabstand zwischen der Oberseite der Optikelements und der Maßverkörperung als $\Delta$, die Gitterkonstante der Maßverkörperung mit d, die Wellenlänge des verwendeten Lichtes mit $\lambda$ und den Abstand benachbarter Felder auf dem Optikelement mit $\delta$, so ergibt sich der Abtastabstand $\Delta$ gemäß folgender Gleichung 2:

$$\Delta = \frac{2\delta}{\tan\left(\arcsin\left(\frac{\lambda}{d}\right)\right)} \qquad \text{(Gl. 2)}$$

Der Versatzabstand $\delta$ zwischen den Feldern ergibt sich aus den in der Anwendung geforderten Rotationstoleranzen des Abtastsystems.

Bei einem Versatzabstand $\delta$ = 6mm, einer Wellenlänge $\lambda$ = 976nm und einer Gitterkonstanten d = 2.048$\mu$m der Maßverkörperung resultiert somit ein Abtastabstand $\Delta$ = 22.137mm zwischen der Gitterseite des Optikelements und der Maßverkörperung. Dies stellt gegenüber der bekannten Positionsmesseinrichtung aus der EP 1 762 828 A2 mit den lediglich zwei Abtaststrahlengängen einen vergrößerten Abtastabstand dar. Ein derart vergrößerter Abtastabstand in Luft führt zur einer erhöhten Empfindlichkeit der Positionsmesseinrichtung gegenüber Luftturbulenzen bzw. Brechungsindex-Schwankungen. Diese Einflüsse können in der erfindungsgemäßen Positionsmesseinrichtung jedoch auf mehrere Arten kompensiert werden.

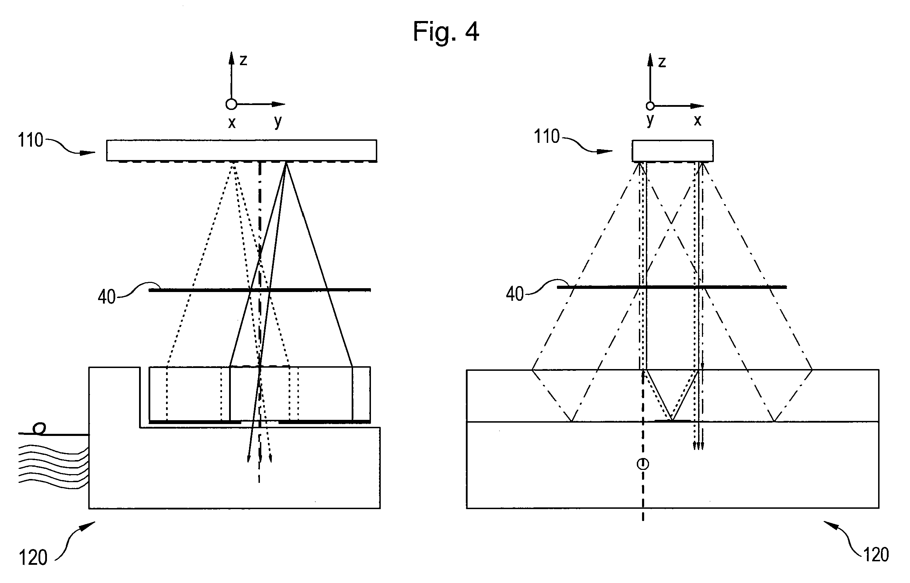

So ist einer ersten Kompensationsvariante möglich, die kompletten Abtaststrahlengänge möglichst hermetisch von der Umgebungsluft abzuschirmen, indem ein Deckglas 40 über den kompletten Abtaststrahlengängen angeordnet wird. Eine entsprechend ausgebildete Variante der erfindungsgemäßen optischen Positionsmesseinrichtung ist in zwei Schnittansichten analog zur Darstellung in den Figuren 1a und 1b in Figur 4 gezeigt. Mit Ausnahme des Deckglases 40 entspricht diese Variante dem bereits oben im Detail erläuterten ersten Ausführungsbeispiel. Die Position des Deckglases 40 sollte dabei möglichst nah an der Maßverkörperung 110 liegen, um die freie Wegstrecke in den drei Abtaststrahlengängen in Luft zwischen Maßverkörperung 110 und Abtastsystem 120 zu minimieren.

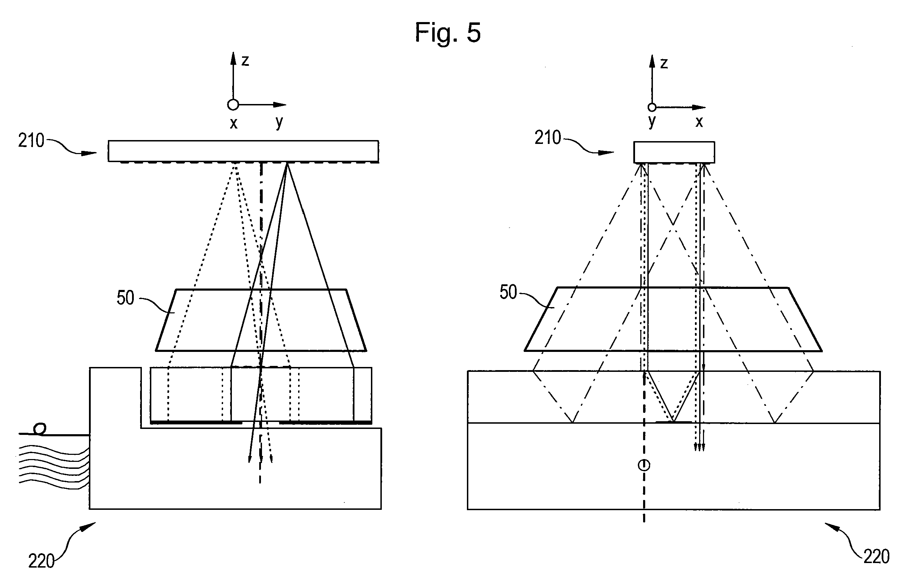

Eine zweite Kompensationsvariante ist in analoger Darstellung in Figur 5 gezeigt. Das freie Luftvolumen zwischen Abtastsystem 220 und Maßverkörperung 210 wird hier möglichst vollständig mit einem Glaskörper 50 ausgefüllt, welches thermisch kompensiert ist. Dies bedeutet, dass die Längenausdehnung des Glaskörpers 50 die Brechungsindex-Änderung kompensiert. So können keine Brechungsindex-Änderungen in der Luft durch Veränderungen von Druck, Temperatur oder Feuchte die Positionsbestimmung beeinflussen. Ebenfalls sind schnelle Luftaustausche nicht möglich. Der thermisch kompensierte Glaskörper 50 ist vor allem für die Abtaststrahlengänge der A-Achse und der B-Achse relevant, da hier die Wege der Teilstrahlenbündel im Glas aufgrund der unterschiedlichen Winkel und somit die Wegstrecken der Teilstrahlenbündel in Glas für die verschiedenen Beugungsordnungen unterschiedlich sind. Ein nicht kompensierter Glaskörper führt hier zu Änderung der bestimmten Position mit der Temperatur. Die X-Achse hingegen ist symmetrisch aufgebaut. Hier muss der

13 EP 2 857 802 B1 14

Glaskörper 50 nicht zwingend thermisch kompensiert sein, solange sicher gestellt werden kann, dass es zwischen den Gläsern in den beiden Beugungsordnungen keinen Temperaturgradienten gibt.

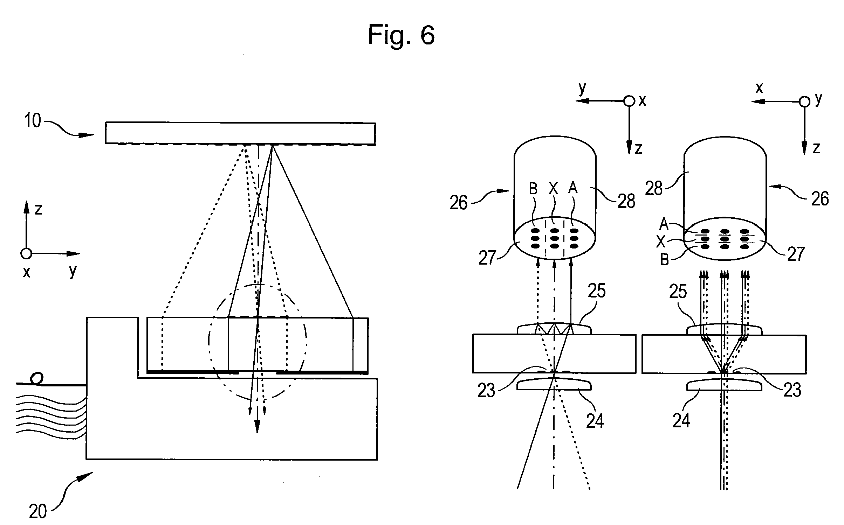

Anhand der Darstellung in Figur 6 wird nachfolgend die in der erfindungsgemäßen Positionsmesseinrichtung ausgangsseitig vorgesehenen Nutzung einer gemeinsamen Auskoppeloptik durch alle drei Abtaststrahlengänge erläutert, über die die in den drei Abtaststrahlengängen erzeugten interferierenden Teilstrahlenbündel in einen zweiten Lichtleiter eingekoppelt wird, der diese Strahlenbündel dann einer nachgeordneten Detektoranordnung zuführt.

Ergänzend sei an dieser Stelle nochmals darauf hingewiesen, dass eingangsseitig die Strahlung einer Lichtquelle über einen ersten Lichtleiter und eine für alle drei Abtaststrahlengänge gemeinsame Einkoppeloptik dem Abtastsystem zugeführt wird.

Im linken Teil der Figur 6 sind hierbei analog zur Darstellung von Figur 1 b die drei vorgesehenen Abtaststrahlengänge des ersten Ausführungsbeispiels in einer schematisierten Ansicht gezeigt. Im rechten Teil der Figur 6 ist die Aufspaltung der interferierenden Teilstrahlenbündel der drei Abtaststrahlengänge sowie deren Auskopplung in den zweiten Lichtleiter in verschiedenen Schnittansichten stark schematisiert veranschaulicht. Gezeigt sind hierbei neben den drei angedeuteten Abtaststrahlengängen eine Fokussierlinse 24, eine Feldlinse 25, das auskoppelseitige Aufspaltgitter 23 sowie der zweite Lichtleiter 26 mit insgesamt 9 Multimode-Lichtleitfasern 27. Die Auskoppeloptik, die erfindungsgemäß von allen drei Abtaststrahlengängen genutzt wird, umfasst die Fokussierlinse 24, das auskoppelseitige Aufspaltgitter 23 sowie die Feldlinse 25.

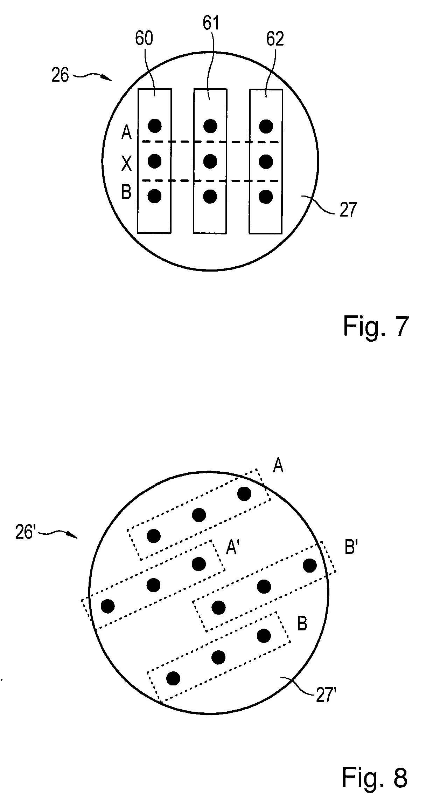

Die überlagerten Strahlenbündel der drei Abtaststrahlengänge treffen in der YZ-Ebene wie ersichtlich aus unterschiedlichen Richtungen auf das Aufspaltgitter 23 und die beiden Linsen 24, 25. Dadurch sind sie nach dem Durchlaufen der Linsen 24, 25 in der Fokus-Ebene räumlich getrennt und können so gemeinsam in die Multimode-Lichtleitfasern 27 des zweiten Lichtleiters 26 eingekoppelt werden, die alle in einer Ferrule 28 in definierter Anordnung gehaltert werden. Die Feldlinse 25 dient hierbei zum Parallelisieren der aufgespaltenen Strahlen, damit die Multimode-Lichtleitfasern 27 nicht unter einem Winkel in die Ferrule 28 eingebracht werden müssen. Eine Draufsicht auf die Ferrule 28 mit den drei Multimode-Lichtleitfasern 27 pro Abtaststrahlengang ist in Figur 7 gezeigt. Wie aus den Figuren ersichtlich, werden die drei überlagerten Strahlenbündel der Achsen A, B und X in X-Richtung jeweils in drei überlagerte Teilstrahlenbündel aufgespalten und getrennt in entsprechende Multimode-Lichtleitfasern 27 eingekoppelt. Auf Seiten der Ferrule 28 sind - lediglich Figur 7 gezeigte - Polarisatoren auf jeder der Multimode-Lichtleitfasern 27 aufgebracht, die jeweils so orientiert sind, dass um 120° phasenverschobene, positionsabhängige Signale in Form einer Intensitätsmodulation entstehen. Vorteilhafterweise können statt einzelnen Polarisatoren auch diffraktive Polarisatoren auf einem gemeinsamen Glassubstrat verwendet werden, bei dem die Polarisationsachsen durch die Orientierung von Gittern bestimmt wird.

Gemäß Figur 7 sind in der oberen und unteren Reihe hierbei die jeweils drei Multimode-Lichtleitfasern 27 für die Signale der A- und B-Achse vorgesehen, mittig hingegen die zum dritten Abtaststrahlengang gehörenden drei Multimode-Lichtleitfasern 27.

Basierend auf diesem gleichen Prinzip werden die Strahlenbündel im Ausführungsbeispiel der erfindungsgemäßen Positionsmesseinrichtung gemäß Figur 3 durch die Auskoppeloptik in jeweils drei Teilstrahlenbündel aufgespalten. In diesem Fall werden jedoch insgesamt vier Strahlenbündel aus den dort vorgesehenen vier Abtaststrahlengängen in jeweils drei Teilstrahlenbündel aufgespalten, nämlich die der A- und B-Achse, sowie die der A'- und B'-Achse. Durch Anordnung des Aufspaltgitters unter 22.5° bzgl. der Y-Achse ist es möglich, mit einer Ferrulenanordnung gemäß Figur 8 die Teilstrahlenbündel in insgesamt 12 Multimode-Lichtleiterfasern 27' zu leiten. Die zusammengehörigen und um 120° phasenverschobenen Signale jeder Achse A, B, A', B' sind in Fig. 8 jeweils durch die eingezeichneten Rechtecke veranschaulicht. Nicht dargestellt sind in Figur 8 die Polarisatoren, die auch hier entweder einzeln aufgebracht oder diffraktiv ausgeführt auf einem gemeinsamen Glassubstrat aufgebracht werden können.

Neben den konkret beschriebenen Ausführungsbeispielen existieren im Rahmen der vorliegenden Erfindung selbstverständlich noch weitere Ausgestaltungsmöglichkeiten.

## Patentansprüche

1. Optische Positionsmesseinrichtung zur Erfassung der Position von zwei relativ zueinander beweglichen Objekten mit

 - einer Maßverkörperung (10; 10'; 110; 210), die mit einem der beiden Objekte verbunden ist sowie
 - einem Abtastsystem (20; 20'; 120; 220) zur Abtastung der Maßverkörperung (10; 10'; 110; 210), die mit dem anderen der beiden Objekte verbunden ist, wobei über das Abtastsystem (20; 20'; 120; 220) eine gleichzeitige Positionsbestimmung entlang einer ersten lateralen Verschiebungsrichtung (Y) als auch entlang einer vertikalen Verschiebungsrichtung (Z) der Objekte möglich ist und hierzu auf Seiten des Abtastsystems (20; 20'; 120; 220) zwei zueinander verkippte Abtaststrahlengänge ausgebildet sind, in denen jeweils aus interferierenden Teilstrahlenbündeln ausgangsseitig eine Gruppe phasenverschobener Signale erzeugbar ist,

8

**dadurch gekennzeichnet, dass**

- über das Abtastsystem (20; 20'; 120; 220) ferner mindestens ein dritter Abtaststrahlengang ausgebildet ist, über den eine Positionsbestimmung entlang einer zweiten lateralen Verschiebungsrichtung (X) der Objekte möglich ist und
- die Strahlung einer Lichtquelle über einen ersten Lichtleiter und eine für alle drei Abtaststrahlengänge gemeinsame Einkoppeloptik dem Abtastsystem (20; 20'; 120; 220) zuführbar ist und
- die in den drei Abtaststrahlengängen erzeugten interferierenden Teilstrahlenbündel über eine gemeinsame Auskoppeloptik in einen zweiten Lichtleiter (26) einkoppelbar sind, der diese Strahlenbündel einer Detektoranordnung zuführt.

2. Optische Positionsmesseinrichtung nach Anspruch 1, **dadurch gekennzeichnet, dass** das Abtastsystem (20; 20'; 120; 220) eingangsseitig ein Aufspaltgitter umfasst, das das von der Einkoppeloptik her einfallende Strahlenbündel in die drei Abtaststrahlengänge aufspaltet, wobei die +/- 1. Beugungsordnungen des Aufspaltgitters dem ersten und zweiten Abtaststrahlengängen zugeordnet sind und die 0. Beugungsordnung dem dritten Abtaststrahlengang zugeordnet ist.

3. Positionsmesseinrichtung nach Anspruch 1, **dadurch gekennzeichnet, dass** im dritten Abtaststrahlengang ein Teilstrahlenbündel in Richtung der Maßverkörperung (10; 10'; 110; 210) propagiert, dort eine Aufspaltung in zwei weitere Teilstrahlenbündel erfährt, die in Richtung des Abtastsystems (20; 20'; 120; 220) zurückreflektiert werden, wo sie jeweils eine Retroreflexion erfahren und entlang der zweiten lateralen Verschieberichtung (X) versetzt wieder in Richtung der Maßverkörperung (10; 10'; 110; 210) propagieren, wo sie interferierend zur Überlagerung gelangen und zurück in Richtung des Abtastsystems (20; 20'; 120; 220) propagieren, wo daraus mehrere phasenverschobene Signale bezüglich einer Relativbewegung entlang der zweiten lateralen Verschieberichtung (X) detektierbar ist.

4. Positionsmesseinrichtung nach Anspruch 1, **dadurch gekennzeichnet, dass** das Abtastsystem (20; 20'; 120; 220) ein Optikelement (22; 22') umfasst, auf dessen der Maßverkörperung (10; 10'; 110; 210) zugewandten Seite mehrere, den verschiedenen Abtaststrahlengängen definiert zugeordnete Gitterfelder (A1 - A4; B1 - B4; X1 - X4; A1' - A4'; B1' - B4'; X1' - X4') mit Transmissionsgittern sowie ein einkoppelseitiges Aufspaltgitter (21; 21') und ein auskoppelseitiges Aufspaltgitter (23; 23') angeordnet sind.

5. Positionsmesseinrichtung nach Anspruch 2, **dadurch gekennzeichnet, dass** die Versatzabstände ($\delta x$) zwischen den Gitterfeldern (A1 - A4; B1 - B4; X1 - X4; A1' - A4'; B1' - B4'; X1' - X4') und den Auskoppelgittern entlang der zweiten lateralen Verschiebungsrichtung (X) identisch gewählt sind.

6. Positionsmesseinrichtung nach Anspruch 2, **dadurch gekennzeichnet, dass** zwischen dem Optikelement (22; 22') und der Maßverkörperung (10; 10'; 110; 210) ein Deckglas (40) angeordnet ist, das sich hinsichtlich seiner Lateralausdehnung über alle Abtaststrahlengänge erstreckt.

7. Positionsmesseinrichtung nach Anspruch 2, **dadurch gekennzeichnet, dass** zwischen dem Optikelement (22; 22') und der Maßverkörperung (10; 10'; 110; 210) ein thermisch kompensierter Glaskörper (50) angeordnet ist, so dass Temperaturänderungen die optischen Weglängen der durchlaufenden Teilstrahlenbündel im Glas nicht verändern.

8. Positionsmesseinrichtung nach Anspruch 1, **dadurch gekennzeichnet, dass** der zweite Lichtleiter (26) pro Abtaststrahlengang jeweils drei Multimodefasern (27) umfasst, die am einkoppelseitigen Ende in einer gemeinsamen Ferrule (28) angeordnet sind.

9. Positionsmesseinrichtung nach Anspruch 1, **dadurch gekennzeichnet, dass** die erste und zweite laterale Verschiebungsrichtung (Y, X) senkrecht zueinander orientiert sind und die Maßverkörperung (10; 10'; 110; 210) als Kreuzgitter ausgebildet ist.

10. Positionsmesseinrichtung nach Anspruch 1, **dadurch gekennzeichnet, dass** die Abtaststrahlengänge aller drei Verschiebungsrichtungen (X, Y, Z) ein gemeinsames Abtastzentrum aufweisen.

11. Positionsmesseinrichtung nach Anspruch 1, **dadurch gekennzeichnet, dass** mindestens ein Teilstrahlenbündel in den Abtaststrahlengängen zwischen dem ersten und dem zweiten Auftreffen auf der Maßverkörperung (10; 10'; 110; 210) einen Versatz entlang der jeweiligen Verschiebungsrichtung (X) erfährt.

12. Positionsmesseinrichtung nach Anspruch 2, **dadurch gekennzeichnet, dass** zur Rückreflexion der Teilstrahlenbündel das Optikelement (22; 22') diffraktive Bauteile umfasst, die mehrere optische Funktionen in sich vereinen.

**Claims**

1. Optical position measuring device for capturing the position of two objects that are movable relative to one another, having

- a material measure (10; 10'; 110; 210) connected to one of the two objects, and also
- a scanning system (20; 20'; 120; 220) for scanning the material measure (10; 10'; 110; 210) that is connected to the other one of the two objects, wherein the scanning system (20; 20'; 120; 220) enables simultaneous position determination along a first lateral displacement direction (Y) and along a vertical displacement direction (Z) of the objects and, to this end, two scanning beam paths are realized on the side of the scanning system (20; 20'; 120; 220) which are inclined with respect to one another and in which a group of phase-shifted signals is generatable in each case from interfering partial beams on the exit side, **characterized in that**
- furthermore at least a third scanning beam path is realized via the scanning system (20; 20'; 120; 220), which third scanning beam path enables position determination along a second lateral displacement direction (X) of the objects, and
- the radiation from a light source is suppliable to the scanning system (20; 20'; 120; 220) via a first waveguide and an input coupling optics that is common to all three scanning beam paths, and
- the interfering partial beams generated in the three scanning beam paths are coupleable, via a common output coupling optics, into a second waveguide (26) which supplies these beams to a detector arrangement.

2. Optical position measuring device according to Claim 1, **characterized in that** the scanning system (20; 20'; 120; 220) comprises, on the entrance side, a splitting grating that splits the beams that are incident from the input coupling optics into three scanning beam paths, wherein the +/-1st orders of diffraction of the splitting grating are associated with the first and second scanning beam paths and the 0th order of diffraction is associated with the third scanning beam path.

3. Position measuring device according to Claim 1, **characterized in that** a partial beam propagates in the third scanning beam path in the direction of the material measure (10; 10'; 110; 210), is split here into two further partial beams that are reflected back in the direction of the scanning system (20; 20'; 120; 220) where they each undergo retroreflection and, offset along the second lateral displacement direction (X), propagate again in the direction of the material measure (10; 10'; 110; 210), where they superpose in interfering fashion and propagate back in the direction of the scanning system (20; 20'; 120; 220), where a plurality of phase-shifted signals with respect to a relative movement along the second lateral displacement direction (X) is detectable therefrom.

4. Position measuring device according to Claim 1, **characterized in that** the scanning system (20; 20'; 120; 220) comprises an optics element (22; 22'), wherein arranged on that side of the optics element which faces the material measure (10; 10'; 110; 210) are a plurality of grating fields (A1-A4; B1-B4; X1-X4; A1'-A4'; B1'-B4'; X1'-x4'), which are associated with the different scanning beam paths in a defined fashion, having transmission gratings and also a splitting grating (21; 21') on the input-coupling side and a splitting grating (23; 23') on the output-coupling side.

5. Position measuring device according to Claim 2, **characterized in that** the offset distances ($\delta x$) between the grating fields (A1-A4; B1-B4; X1-X4; A1'-A4'; B1'-B4'; X1'-X4') and the output coupling gratings along the second lateral displacement direction (X) are selected to be identical.

6. Position measuring device according to Claim 2, **characterized in that** arranged between the optics element (22; 22') and the material measure (10; 10'; 110; 210) is a covering glass (40) that extends, in terms of its lateral extension, across all scanning beam paths.

7. Position measuring device according to Claim 2, **characterized in that** arranged between the optics element (22; 22') and the material measure (10; 10'; 110; 210) is a thermally compensating glass body (50) such that temperature changes do not alter the optical path lengths of the travelling partial beams in the glass.

8. Position measuring device according to Claim 1, **characterized in that** the second waveguide (26) comprises in each case three multi-mode fibres (27) per scanning beam path which are arranged at the input coupling end in a common ferrule (28).

9. Position measuring device according to Claim 1, **characterized in that** the first and second lateral displacement directions (Y, X) are oriented such that they are perpendicular to one another and the material measure (10; 10'; 110; 210) is configured as a cross grating.

10. Position measuring device according to Claim 1, **characterized in that** the scanning beam paths of all three displacement directions (X, Y, Z) have a common scanning centre.

11. Position measuring device according to Claim 1, **characterized in that** at least one partial beam in the scanning beam paths undergoes an offset along the respective displacement direction (X) between the first and the second incidences on the material measure (10; 10'; 110; 210).

12. Position measuring device according to Claim 2, **characterized in that** the optics element (22; 22') comprises diffractive components that exhibit a plurality of optical functions for back reflection of the partial beams.

**Revendications**

1. Dispositif de mesure de position optique destiné à détecter la position de deux objets mobiles l'un par rapport à l'autre, comprenant

    - un étalon (10 ; 10' ; 110 ; 210) qui est relié à l'un des deux objets et

    - un système de palpage (20 ; 20' ; 120 ; 220) destiné à palper l'étalon (10 ; 10' ; 110 ; 210), lequel est relié à l'autre des deux objets, une détermination de position simultanée le long d'une première direction de translation latérale (Y) ainsi que le long d'une direction de translation verticale (Z) des objets étant possible par le biais du système de palpage (20 ; 20' ; 120 ; 220) et deux trajets de rayon de palpage désalignés angulairement l'un par rapport à l'autre étant formés par le système de palpage (20 ; 20' ; 120 ; 220), dans lesquels un groupe de signaux déphasés peut respectivement être généré du côté de la sortie à partir de faisceaux de rayons partiels interférents,

**caractérisé en ce que**

    - au moins un troisième trajet de rayon de palpage est en plus formé par le biais du système de palpage (20 ; 20' ; 120 ; 220), par le biais duquel il est possible de réaliser une détermination de position le long d'une deuxième direction de translation latérale (X) des objets et

    - le rayonnement d'une source de lumière peut être acheminé au système de palpage (20 ; 20' ; 120 ; 220) par le biais d'une première fibre optique et d'une optique d'injection commune pour les trois trajets de rayon de palpage et

    - les faisceaux de rayons partiels interférents générés dans les trois trajets de rayon de palpage peuvent être injectés par le biais d'une optique de découplage commune dans une deuxième fibre optique (26), laquelle achemine ces faisceaux de rayons à un arrangement détecteur.

2. Dispositif de mesure de position optique selon la revendication 1, **caractérisé en ce que** le système de palpage (20 ; 20' ; 120 ; 220) comprend du côté de l'entrée une grille de dissociation qui dissocie le faisceau de rayons incident depuis l'optique d'injection en les trois trajets de rayon de palpage, les +/- 1er ordres de diffraction de la grille de dissociation étant associés aux premier et deuxième trajets de rayon de palpage et le 0ème ordre de diffraction étant associé au troisième trajet de rayon de palpage.

3. Dispositif de mesure de position selon la revendication 1, **caractérisé en ce que** dans le troisième trajet de rayon de palpage, un faisceau de rayons partiels se propage en direction de l'étalon (10 ; 10' ; 110 ; 210), y subit une dissociation en deux faisceaux de rayons partiels supplémentaires qui sont réfléchis en arrière en direction du système de palpage (20 ; 20' ; 120 ; 220), où ils subissent respectivement une rétroréflexion puis se propagent de nouveau en direction de l'étalon (10 ; 10' ; 110 ; 210) en étant décalés le long de la deuxième direction de translation latérale (X) où ils sont amenés à se superposer de manière interférente, puis se propagent en arrière en direction du système de palpage (20 ; 20' ; 120 ; 220) où, à partir de ceux-ci, peuvent être détectés plusieurs signaux déphasés par rapport à un mouvement relatif le long de la deuxième direction de translation latérale (X).

4. Dispositif de mesure de position selon la revendication 1, **caractérisé en ce que** le système de palpage (20 ; 20' ; 120 ; 220) comprend un élément optique (22 ; 22') sur le côté faisant face à l'étalon (10 ; 10' ; 110 ; 210) duquel sont disposés plusieurs champs de grille (A1 - A4 ; B1 - B4 ; X1 - X4 ; A1'-A4' ; B1' - B4' ; X1' - X4') associés définissant les différents trajets de rayon de palpage, pourvus de grilles de transmission ainsi qu'une grille de dissociation (21 ; 21') du côté de l'injection et une grille de dissociation (23 ; 23') du côté du découplage.

5. Dispositif de mesure de position selon la revendication 2, **caractérisé en ce que** les écarts de décalage ($\delta x$) entre les champs de grille (A1 - A4 ; B1 - B4 ; X1 - X4 ; A1' - A4' ; B1' - B4' ; X1' - X4') et les grilles de découplage sont choisis identiques le long de la deuxième direction de translation latérale (X).

6. Dispositif de mesure de position selon la revendication 2, **caractérisé en ce qu'**entre l'élément optique (22 ; 22') et l'étalon (10 ; 10' ; 110 ; 210) est disposé un verre de protection (40) qui, du point de vue de son extension latérale, s'étend sur tous les trajets de rayon de palpage.

7. Dispositif de mesure de position selon la revendication 2, **caractérisé en ce qu'**entre l'élément optique (22 ; 22') et l'étalon (10 ; 10' ; 110 ; 210) est disposé un corps en verre (50) à compensation thermique, de sorte que les variations de température ne modifient pas dans le verre les longueurs de parcours optiques des faisceaux de rayons partiels traversant.

8. Dispositif de mesure de position selon la revendication 1, **caractérisé en ce que** la deuxième fibre optique (26) comprend respectivement trois fibres multimodales (27) par trajet de rayon de palpage, lesquelles sont disposées à l'extrémité côté injection dans une férule (28) commune.

9. Dispositif de mesure de position selon la revendication 1, **caractérisé en ce que** les première et deuxième directions de translation latérales (Y, X) sont orientées perpendiculairement l'une à l'autre et l'étalon (10 ; 10' ; 110 ; 210) est réalisé sous la forme d'un réseau croisé.

10. Dispositif de mesure de position selon la revendication 1, **caractérisé en ce que** les trajets de rayon de palpage de toutes les trois directions de translation (X, Y, Z) possèdent un centre de palpage commun.

11. Dispositif de mesure de position selon la revendication 1, **caractérisé en ce qu'**au moins un faisceau de rayons partiel dans les trajets de rayon de palpage subit un décalage le long de la direction de translation (X) respective entre la première et la deuxième incidence sur l'étalon (10 ; 10' ; 110 ; 210).

12. Dispositif de mesure de position selon la revendication 2, **caractérisé en ce que** pour la réflexion en arrière des faisceaux de rayons partiels, l'élément optique (22 ; 22') comprend des éléments structuraux diffractifs qui réunissent en eux plusieurs fonctions optiques.

Fig. 1a

Fig. 1b

Fig. 1c

Fig. 2a

10'

22'

20'

10'

22'

20'

z
y
x

Fig. 2b

Fig. 3

# Fig. 4

EP 2 857 802 B1

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1762828 A2
- US 20120032067 A1
- EP 1533594 A1
- EP 1739395 A2